# EUROPEAN PATENT APPLICATION

(11) **EP 4 729 586 A1**
(43) Date of publication of application: **22.04.2026**
(21) Application number: 24845968.7
(22) Date of filing: 22.07.2024
(51) Int. Cl.: C09D 11/38, C09D 11/03, C09D 11/037, C09K 3/00, C08K 3/32, C08K 3/08

(54) **INK COMPOSITION USING NANO COPPER COMPOUND HAVING HIGH NEAR-INFRARED ABSORBENCY**

(30) Priority: 21.07.2023 KR 20230095383
(71) Applicant: Nano CMS Co., Ltd., Cheonan-si, Chungcheongnam-do 31040 (KR); Korea Minting, Sesecurity Printing & ID Card Operating Corp., Daejeon 34132 (KR)
(72) Inventor: KANG, Tae Hoon, Cheonan-si Chungcheongnam-do 31040 (KR); LEE, Sang Geun, Cheonan-si Chungcheongnam-do 31040 (KR); KIM, Shi Surk, Cheonan-si Chungcheongnam-do 31040 (KR); LEE, Seong Uk, Cheonan-si Chungcheongnam-do 31040 (KR); AN, Kyoung Lyong, Cheonan-si Chungcheongnam-do 31040 (KR); SEO, Bom Joon, Daejeon 34132 (KR); CHO, Min Soo, Daejeon 34132 (KR); SHIN, Hwa Sup, Daejeon 34132 (KR); JANG, Ju Hyun, Daejeon 34132 (KR); SUNG, Seong Hwa, Daejeon 34132 (KR)
(74) Representative: Nederlandsch Octrooibureau
(86) International application number: PCT/KR2024/010523
(87) International publication number: WO 2025/023666

(57) **Abstract**

The present invention relates to an ink composition for printing a compound that absorbs near-infrared rays and, more specifically, to an ink composition for printing a copper compound having a maximum absorption wavelength in the near-infrared region. The ink composition for printing a copper compound according to the present invention can have a maximum absorption wavelength of 1000 nm or greater. In addition, the copper compound is applied as an inkjet ink by synthesizing into nanoparticles, and thus not only has a high absorption intensity in the near-infrared region but also has high dispersibility, and thus can be easily applied to offset printing. In addition, a printed product having excellent chemical resistance can be manufactured through post-treatment of a near-infrared absorber.

## Description

### [Technical Field]

The present disclosure relates to a near-infrared absorbing pigment and an ink composition containing a nanoparticulate copper compound as a near-infrared absorber, which is material that can be usefully used as a near-infrared absorber having high absorption ability in the near-infrared wavelength range.

Furthermore, an ink composition with excellent chemical resistance of the near-infrared absorber was prepared using a surfactant. The present disclosure also relates to a technology for various uses and applications, such as anti-counterfeiting, anti-tampering, and machine-readable detection of security products utilizing the aforementioned near-infrared absorption properties, as well as inkjet, offset, screen, and gravure printing.

### [Background Art]

A near-infrared absorber generally refers to a material that absorbs light in a wavelength range of 700 to 2,500 nm, and exhibits characteristics of being invisible under visible light while being visible through absorption and/or reflection in the near-infrared region. Accordingly, the technology is primarily applied to banknotes, checks, passports, bonds, and other valuable securities for which security is required, and a brief description will be provided of fields related to the present disclosure.

The nanoparticulate copper compound synthesized according to the present disclosure is applied to various fields such as inkjet, offset, screen, gravure, and intaglio printing, and is utilized for the purposes of anti-counterfeiting, machine detection, and identification by applying near-infrared absorbing material into security products such as banknotes, security documents, passports, and checks. Since these security products are frequently handled by users and thus are liable to be damaged, the development of a near-infrared absorber composition having excellent chemical resistance, such as solvent resistance, acid resistance, and alkali resistance, is essential to ensure the safety and reliability of the products.

In general, materials that absorb wavelengths in the near-infrared region are diverse, and may be classified into near-infrared absorbing organic dye compounds and near-infrared absorbing inorganic pigment compounds.

Representative near-infrared absorbing organic dye compounds include azo-based, phthalocyanine-based, squarylium-based, diimmonium-based, cyanine-based, and dithiolene-based types, and absorb near-infrared wavelengths in range of 700 to 1,000 nm depending on the type of substituent and central metal. The central metal includes metals or metal oxides such as copper, nickel, zinc, vanadium, iron, manganese, lithium, and cobalt.

Near-infrared absorbing inorganic pigment compounds mainly include phosphate-based and pyrophosphate-based compounds, and in recent years, research has been conducted on alkali phosphate-based compounds containing alkali metals. Although inorganic near-infrared absorbing pigments vary depending on the bonded metal, they exhibit a lighter appearance color compared to organic near-infrared absorbing dyes and are therefore sometimes used as colorless near-infrared absorbers. In addition, inorganic near-infrared absorbers show differences in absorption ability depending on particle size. Metals such as copper, nickel, iron, titanium, and manganese are used as central metals, and lithium, sodium, and potassium are used as alkali metals. The nanoparticulate copper compound of the present disclosure falls into this category.

Near-infrared absorbing inorganic pigment compounds exhibit higher stability than near-infrared absorbing organic dye compounds, and have strong resistance to UV light and heat, as well as high chemical stability, thereby providing the advantage of not being easily deteriorated during long-term use.

These near-infrared absorbing materials each have advantages and disadvantages in terms of near-infrared absorbance, light resistance, and heat resistance depending on their respective physicochemical properties, and are therefore selectively used according to the intended purpose; however, such materials are characterized in that they possess a specific visible color.

While inkjet printers have numerous advantages over other types of printing and imaging, there is a need to provide dyes that satisfy the conflicting demands of not dissolving within the ink medium and not bleeding or smearing excessively when printed onto paper.

In order to prevent individual sheets of paper from sticking to each other after printing, the ink needs to dry rapidly; however, it must not form solidified matter on the fine nozzles within the printer. Storage stability is also important to prevent the formation of particles that may clog the fine nozzles used in printer.

### [Disclosure]

### [Technical Problem]

The present disclosure relates to a security printing ink composition in which a nanoparticulate near-infrared absorber and a surfactant form a micellar structure while maintaining a nanoscale size, thereby not affecting fine nozzles of a printer and exhibiting enhanced chemical resistance. An object of the present disclosure is to provide a security printing ink composition that complements for drawbacks of existing organic near-infrared absorbers based on the inorganic near-infrared absorber of the present disclosure, and has enhanced absorption properties and chemical resistance.

### [Technical Solution]

In order to solve the problems of the present disclosure, as one embodiment of the present disclosure, the present disclosure provides a security printing ink composition comprising: a phosphate-based near-infrared absorber having a nanoparticulate particle size distribution and containing one or more transition elements selected from the group consisting of Ti, V, Cr, Mn, Fe, Co, Ni, Cu, Zn, Zr, Nb, Mo, Ru, Rh, Pd, Ag, Hf, Ta, W, Re, Os, Ir, Pt, and Au; and a surfactant, wherein the near-infrared absorber and surfactant form a micellar structure.

As another embodiment of the present disclosure, the near-infrared absorber may have a particle size distribution of 10 to 1,000 nm.

As another embodiment of the present disclosure, the near-infrared absorber may be Cu₂PO₄(OH), preferably Cu₂PO₄(OH) having a libethenite crystal structure.

As another embodiment of the present disclosure, the surfactant may be one selected from the group consisting of polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate, polyoxyethylene sorbitan trioleate, sorbitan monolaurate, sorbitan monostearate, sorbitan tristearate, sorbitan monooleate, sorbitan trioleate, poloxamer 124, poloxamer 188, poloxamer 237, poloxamer 338, poloxamer 407, dodecylbenzenesulfonate, poly(4-vinylpyridine), sodium dodecyl sulfonate, cetyltrimethylammonium bromide, polyvinylpyrrolidone, and octylphenol ethoxylate.

As another embodiment of the present disclosure, the nanoparticulate near-infrared absorber may include IR-absorbing transition element atoms or ions at a concentration of 20 to 40% by weight.

As another embodiment of the present disclosure, the nanoparticulate near-infrared absorber may be included in an amount of 0.1 to 40% by weight of the ink composition.

As another embodiment of the present disclosure, the ink composition may be used for inkjet, offset, screen, gravure, or intaglio printing.

### [Advantageous Effects]

An ink composition using a nano copper compound prepared according to the present disclosure exhibits high absorption ability in the near-infrared region, and has enhanced chemical resistance as a near-infrared absorber and a surfactant form a micellar structure.

### [Description of Drawings]

FIG. 1 shows the near-infrared absorbance of the nanoparticulate copper compound of Synthesis Example 1.
FIG. 2 shows the near-infrared absorbance of the copper compound of Comparative Synthesis Example 1.
FIG. 3 shows X-ray diffraction (XRD) data of Synthesis Example 1.
FIG. 4 shows energy dispersive spectroscopy (EDS) data of Synthesis Example 1.
FIG. 5 shows a particle size distribution chart of Synthesis Example 1.
FIG. 6 shows a scanning electron microscope (SEM) image of the nanoparticulate copper compound of Synthesis Example 1.
FIG. 7 shows an SEM image of the nanoparticulate copper compound in Synthesis Example 1, with particle sizes indicated.
FIG. 8 shows an SEM image of the copper compound of Synthesis Example 2.
FIG. 9 shows an SEM image of the copper compound of Synthesis Example 2, with particle sizes indicated.
FIG. 10 shows an SEM image of the copper compound of Synthesis Example 3.
FIG. 11 shows an SEM image of the copper compound of Synthesis Example 3, with particle sizes indicated.
FIG. 12 shows an SEM image of the copper compound of Comparative Synthesis Example 1.
FIG. 13 shows an SEM image of the copper compound of Comparative Synthesis Example 1, with particle sizes indicated.

### [Best Mode]

The present disclosure relates to a printing ink composition containing a copper compound having a maximum absorption wavelength in the near-infrared region, wherein the printing ink composition containing the copper compound according to the present disclosure has a maximum absorption wavelength of 1,000 nm or more.

As used herein, the term "ultraviolet" (UV) is used to designate a spectral range between 100 and 400 nm, the term "visible light" (Vis) is used to designate a spectral range between 400 and 700 nm, the term "infrared" (IR) is used to designate a spectral range between 780 and 15,000 nm, and the term "Near-infrared" (NIR) is used to designate a spectral range between 780 and 1,400 nm (a range provided by the International Commission on Illumination (CIE), as cited in Sliney D. H., Eye (the Scientific Journal of the Royal College of Ophthalmologists, 2016, 30(2), pages 222-229).

The printing ink composition according to the present disclosure comprises a phosphate-based near-infrared absorber having a nanoparticulate particle size distribution and containing one or more transition elements; and a surfactant, wherein the near-infrared absorber and the surfactant form a micellar structure.

The transition elements of the near-infrared absorber may be one or more selected from the group consisting of Ti, V, Cr, Mn, Fe, Co, Ni, Cu, Zn, Zr, Nb, Mo, Ru, Rh, Pd, Ag, Hf, Ta, W, Re, Os, Ir, Pt and Au, and the near-infrared absorber preferably includes 20 to 40% by weight of the transition elements or ions.

The surfactant that forms a micellar structure with near-infrared absorber may be one or more selected from the group consisting of polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate, polyoxyethylene sorbitan trioleate, sorbitan monolaurate, sorbitan monostearate, sorbitan tristearate, sorbitan monooleate, sorbitan trioleate, poloxamer 124, poloxamer 188, poloxamer 237, poloxamer 338, poloxamer 407, dodecylbenzenesulfonate, poly(4-vinylpyridine), sodium dodecyl sulfonate, cetyltrimethylammonium bromide, polyvinylpyrrolidone, and octylphenol ethoxylate.

The printing ink composition according to the present disclosure is prepared by synthesizing a copper compound of a near-infrared absorbing material into nanoparticles and applying the same to a printing ink, thereby exhibiting high absorption intensity in the near-infrared region and high dispersibility, and thus being suitable for offset printing. In addition, by forming a micellar structure using a surfactant, it is possible to produce a printed product with excellent chemical resistance.

The near-infrared absorber included in the printing ink composition according to the present disclosure has a particle size distribution of 10 to 1,000 nm, and due to the small nanoparticle size, the composition has an advantage in that there is no risk of clogging an inkjet head.

Furthermore, the near-infrared absorber that has been surface-treated with a surfactant to form a micellar structure, exhibits little or no difference in particle size compared to a near-infrared absorber that has not been surface-treated, and likewise maintains a nanoscale size. Therefore, when the near-infrared absorbers that form micellar structures with surfactants is used, it is possible to maintain the nanoscale characteristics of the nanoparticle near-infrared absorber while exhibiting excellent chemical resistance, thereby enabling use as an inkjet ink.

The content of the near-infrared absorber included in the printing ink composition according to the present disclosure is 0.1 to 40% by weight of the total ink composition. When the content of the near-infrared absorber exceeds 40% by weight of the ink composition, the content of binder used in the ink preparation is reduced, which may cause a problem in that the overall resistance of the ink is weakened.

The printing ink composition according to the present disclosure is a security printing ink composition intended for inkjet, offset, screen, gravure, and intaglio printing.

### [Mode for Invention]

Hereinafter, preferred examples of the present disclosure will be described in detail. However, the following examples are provided to enable those skilled in the art to fully understand the present disclosure, and may be modified in various forms, and thus the scope of the present disclosure is not limited to the examples described below.

### [Synthesis Example 1]

In order to synthesize copper hydroxide phosphate nanoparticles, a 0.2 M aqueous copper sulfate solution was added to a three-neck flask and stirred. Then, a 0.2 M aqueous ammonium phosphate solution was prepared in a beaker and stirred. The aqueous ammonium phosphate solution was added to the aqueous copper sulfate solution, followed by stirring for 1 hour. Then, aqueous ammonia was added while stirring until the pH reached 5 to 7. The mixture was stirred while maintaining the temperature at 100°C until the reaction was completed for 3 hours. After completion of the reaction, the resulting precipitate was filtered and washed.

### [Synthesis Example 2]

In order to synthesize copper hydroxide phosphate, a 0.2 M aqueous copper nitrate solution was added to a three-neck flask and stirred. Then, a 0.2 M aqueous ammonium phosphate solution was prepared in a beaker and stirred. The aqueous ammonium phosphate solution was added to the aqueous copper nitrate solution, followed by stirring for 1 hour. Then, aqueous ammonia was added while stirring until the pH reached 5 to 7. The mixture was stirred while maintaining the temperature at 100°C until the reaction was completed for 3 hours. After completion of the reaction, the resulting precipitate was filtered and washed.

### [Synthesis Example 3]

In order to synthesize copper hydroxide phosphate, a 0.2 M aqueous copper chloride solution was added to a three-neck flask and stirred. Then, a 0.2 M aqueous ammonium phosphate solution was prepared in a beaker and stirred. The aqueous ammonium phosphate solution was added to the aqueous copper chloride solution, followed by stirring for 1 hour. Then, aqueous ammonia was added while stirring until the pH reached 5 to 7. The mixture was stirred while maintaining the temperature at 100°C until the reaction was completed for 3 hours. After completion of the reaction, the resulting precipitate was filtered and washed.

### [Comparative Synthesis Example 1]

In order to synthesize copper hydroxide phosphate, a 0.1 M aqueous copper nitrate solution was added to 250 ml of beaker and stirred. Then, a 0.1 M aqueous sodium phosphate solution was prepared in another beaker and stirred. After the aqueous sodium phosphate solution was added to the aqueous copper nitrate solution, the mixture was heated and stirred for 1 hour. Then, the reaction was carried out at 120°C for 8 hours using an autoclave. After completion of the reaction, the resulting precipitate was filtered and washed.

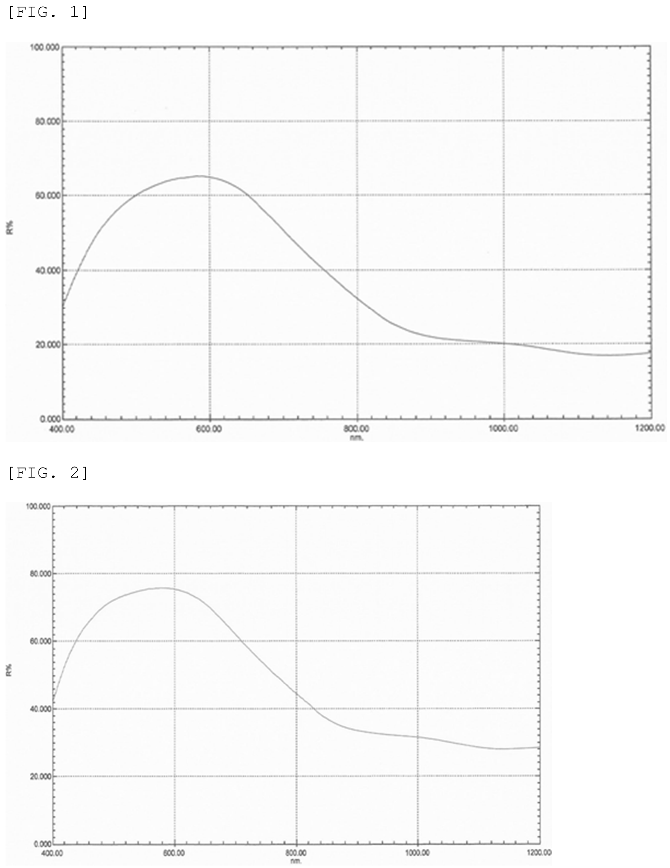

FIG. 1 shows the near-infrared absorbance of the nanoparticulate copper compound of Synthesis Example 1. The near-infrared absorbing material according to the present disclosure has an absorption difference of a range of about 40 to 50% between the visible light region and the near-infrared region.

When the absorption difference between the visible light region and the near-infrared region is in the range of 40 to 50% as described above, the material has a bright appearance, thereby providing various advantages in usability as a security material.

FIG. 2 shows the near-infrared absorbance of the copper compound of Comparative Synthesis Example 1. The copper compound prepared according to Comparative Synthesis Example 1 exhibits an absorbance difference of a range of about 30 to 40% between the visible light region and the near-infrared region, which confirms that the compound shows lower absorbance in the near-infrared region than that of the nanoparticulate copper compound of Synthesis Example 1. Therefore, in the case of Synthesis Example 1, a desired near-infrared absorbance may be achieved even with a lower content than that of Comparative Synthesis Example 1, and thus it can be regarded as superior in terms of applicability as a security material.

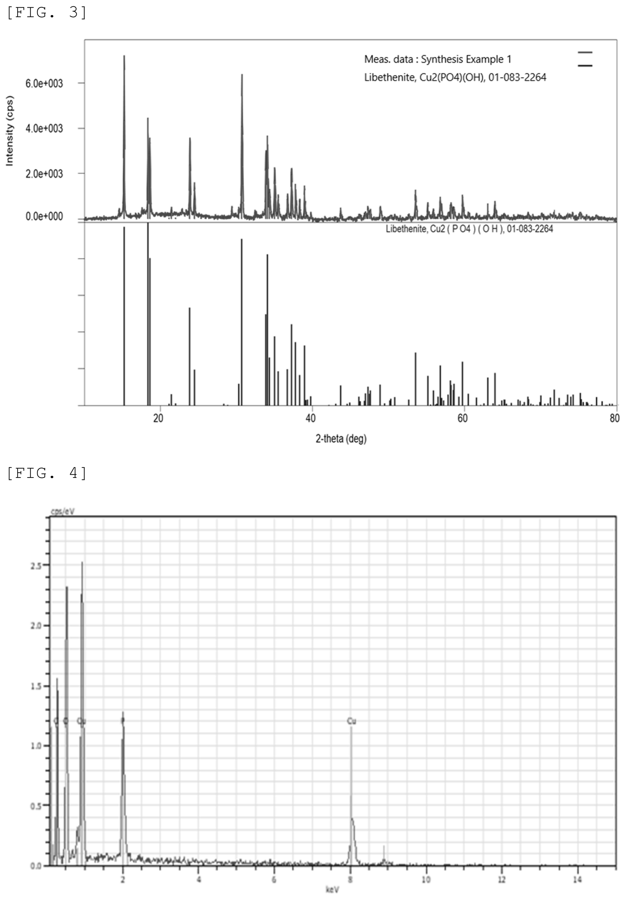

FIG. 3 shows the XRD pattern of the nanoparticulate near-infrared absorbing material of Synthesis Example 1, in which the graph corresponding to Synthesis Example 1 is shown in red, and the graph corresponding to the libethenite, which serves as a standard material and corresponding to Cu₂(PO₄)(OH), is shown in blue. Since the XRD data of the nanoparticulate near-infrared absorbing material of Synthesis Example 1 and the graph of libethenite show peaks at the same positions, it can be seen that the materials are identical, although differences are observed in particle size distribution. The materials obtained in Synthesis Example 2 and Synthesisc Example 3 are also the same material as libethenite, with only a difference in particle size distribution.

Specifically, the theoretical elemental analysis values of the crystal structure of Synthesis Example 1 consist of about 53% by weight of copper, 13% by weight of phosphorus, and 33% by weight of oxygen. The actual elemental analysis values of the crystal structure of the copper compound synthesized by Synthesis Example 1 were found to be about 50% of weight of copper, 15% of weight of phosphorus, 31% by weight of oxygen, and other components. This indicates that the base composition may vary depending on various factors and variables in the synthesis process. Therefore, it should be considered that the copper compound of the present disclosure may not have quantitative properties, and may have variable values in both qualitative and quantitative components.

FIG. 4 shows the EDS analysis of the nanoparticulate copper compound of Synthesis Example 1. EDS is a technique coupled with an electron microscope, in which electrons are irradiated onto the surface of a sample and collide with it, generating radiation (characteristic X-rays) that is then analyzed. By measuring the energy of the resulting X-rays and correlating it with the characteristic energy of elements, the elements contained in the sample may be analyzed. In FIG. 4, the EDS of the nanoparticulate copper compound of Synthesis Example 1 confirms the presence of metal element Cu.

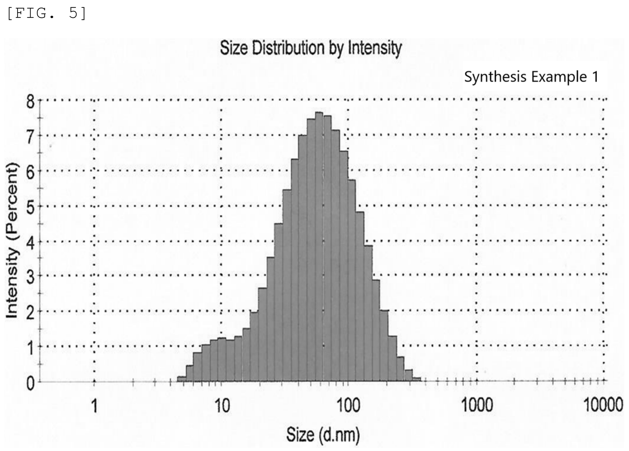

FIG. 5 shows a particle size distribution chart of the nanoparticulate copper compound prepared in Synthesis Example 1. Referring to the graph, the nanoparticulate copper compound prepared in Synthesis Example 1 exhibits a particle size distribution of about 5 to 300 nm, with particles of 100 nm or less accounting for 70 to 80% of the distribution, confirming the formation of nanoparticles.

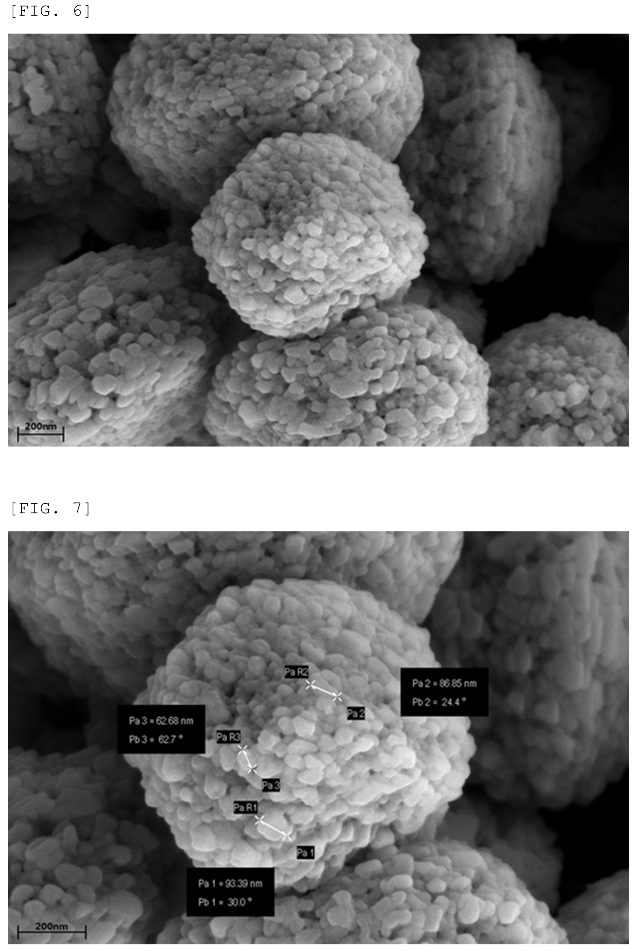

FIG. 6 shows a scanning electron microscope (SEM) image of the nanoparticulate copper compound particles of Synthesis Example 1, measured by using SEM.

FIG. 7 shows the SEM image of the nanoparticulate copper compound in Synthesis Example 1, with particle sizes indicated. As shown in FIG. 7, the particle sizes of the nanoparticulate copper compound prepared from copper sulfate range from 20 to 150 nm, confirming the formation of nanoparticles.

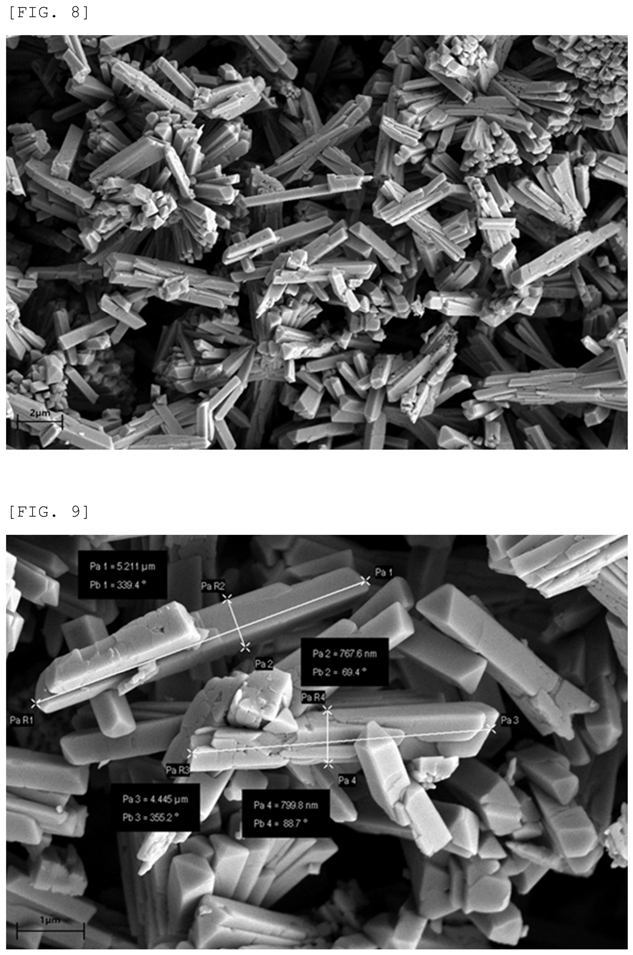

FIG. 8 shows a scanning electron microscope (SEM) image of the copper compound particles of Synthesis Example 2, measured by using SEM.

FIG. 9 shows an SEM image of the copper compound particles of Synthesis Example 2, with particle sizes indicated. As shown in FIG. 9, the particle sizes of the copper compound prepared from copper nitrate range from 4 to 5 µm, confirming that nanoparticles were not formed.

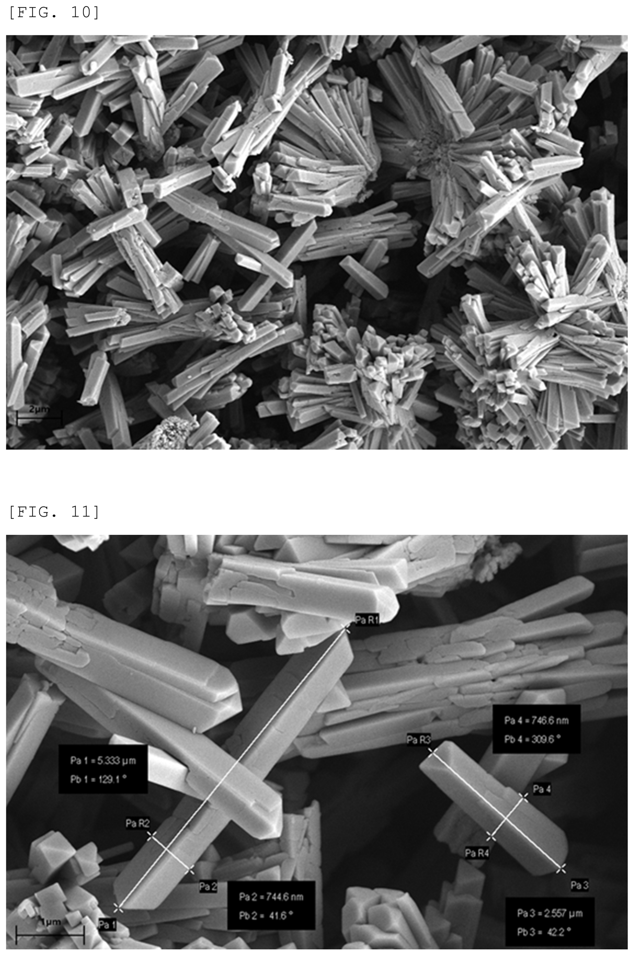

FIG. 10 shows an SEM image of the copper compound particles of Synthesis Example 3, measured by using SEM.

FIG. 11 shows an SEM image of the copper compound particles of Synthesis Example 3, with particle sizes indicated. As shown in FIG. 11, the particle size of the copper compound prepared from copper chloride range from 5 to 7 µm, confirming that nanoparticles were not formed.

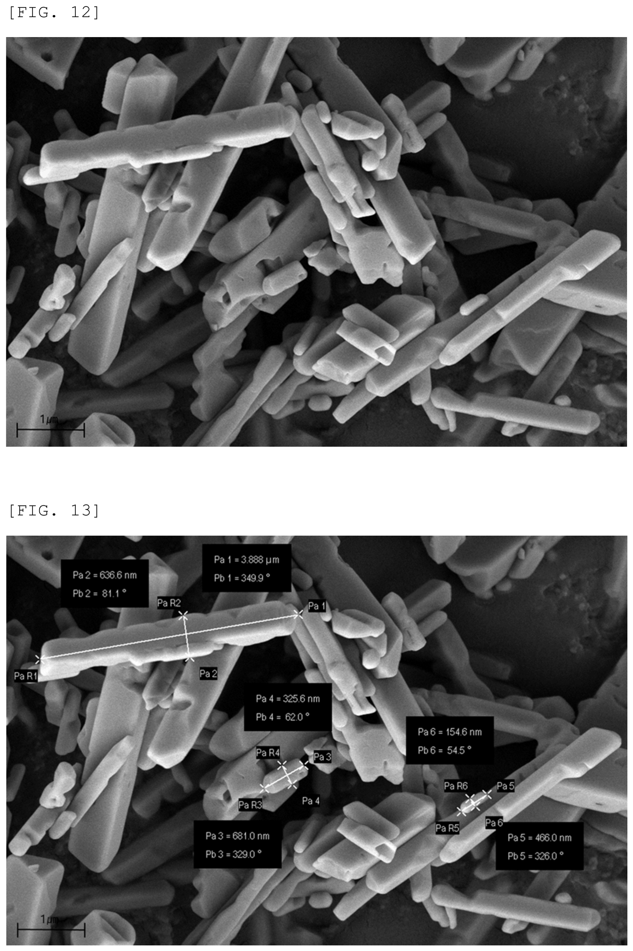

The particles of the copper compound of Comparative Synthesis Example 1 were measured by using scanning electron microscopy (SEM), and the SEM images and the particle size distribution measured therefrom are shown in FIGS. 12 and 13, respectively. As shown in FIGS. 12 and 13, the particle size of the copper compound prepared from copper chloride range from 1 to 3 µm, confirming that nanoparticles were not formed.

In contrast to the copper compound synthesized in Synthesis Example 1, which is nanoparticulated at the nanometer scale, the copper compounds synthesized in Synthesis Examples 2 and 3 and Comparative Synthesis Example 1 exhibit particle sizes at the micrometer scale. Copper compounds with particle sizes at the micrometer scale are unsuitable for use in inkjet inks and offset printing, as their large particle sizes can cause clogging of inkjet heads.

### [Experimental Example 1]

5 g of the copper hydroxide phosphate synthesized in Synthesis Example 1 were dispersed in 100 mL of distilled water, and 0.5 g of dodecylbenzene sulfonate sodium salt (DBS) was added. The mixture was then subjected to ultrasonic treatment at 50°C for about 1 hour. After filtration and drying, nanoparticulate copper hydroxide phosphate surface-treated with a surfactant was prepared.

### Preparation of Inkjet Ink

### [Example 1]

Using the nanoparticulate copper hydroxide phosphate surface-treated with a surfactant obtained in Experimental Example 1 as a near-infrared absorber, the raw materials listed in Table 1 below were dispersed and mixed using a three-roll mill, and then filtered through a 0.45-micron filter paper to prepare the inkjet ink.

Using the ink prepared by the above method, printing was performed with an inkjet printer, and the near-infrared absorption ability at 850 nm was measured using a near-infrared absorption spectrometer (Shimadzu/UV3101 PC).

### [Reference Example 1]

An inkjet ink was prepared in the same manner as in Example 1, except that the nanoparticulate copper hydroxide phosphate obtained in Synthesis Example 1 was used as the near-infrared absorber, and the near-infrared absorption ability was measured.

### [Comparative Example 1]

An inkjet ink was prepared in the same manner as in Example 1, except that the copper hydroxide phosphate obtained in Comparative Synthesis Example 1 was used as the near-infrared absorber, and the near-infrared absorption ability was measured.

**[Table 1]**

| Clas sifi cati on | Near-infrared absorber (g) | Solv ent (g) | Surfacta nt (g) | Antiba cteria l agent (g) | Viscosit y modifier (g) | Disti lled water (g) | Refl ecta nce (%) |
|---|---|---|---|---|---|---|---|
| Exam ple 1 | 10 (Experimenta l Example 1) | 10 | 3 | 1 | 1 | 75 | 26.9 |
| Refe renc e Exam ple | 10 (Synthesis Example 1) | 10 | 3 | 1 | 1 | 75 | 26.4 |
| 1 | | | | | | | |
| Comp arat ive Exam ple 1 | 10 (Comparative Synthesis Example 1) | 10 | 3 | 1 | 1 | 75 | 27.2 |

To confirm the characteristics of a near-infrared absorber as a security material, it is preferable to maximize the difference between the visible light region and the near-infrared region, and the material can effectively function as a near-infrared absorber when the reflectance is 30% or less. As shown in Table 1 above, the inks of Example 1, Reference Example 1, and Comparative Example 1, which were prepared using Synthesis Example 1, Experimental Example 1, and Comparative Synthesis Example 1 as near-infrared absorbers, respectively, exhibited reflectances of 26.4, 26.9, and 27.2% at 850 nm, all 30% or less.

Therefore, it was confirmed that there is no problem in using the nanoparticulate copper hydroxide phosphate surface-treated with a surfactant obtained in Experimental Example 1 as a near-infrared absorber.

### Preparation of Intaglio printing ink

### [Example 2]

Using the nanoparticulate copper hydroxide phosphate surface-treated with a surfactant obtained in Experimental Example 1 as a near-infrared absorber, the raw materials listed in Table 2 below were mixed and milled twice using a three-roll mill to prepare an intaglio printing ink.

### [Reference Example 2]

An intaglio printing ink was prepared in the same manner as in Example 2, except that the copper hydroxide phosphate obtained in Synthesis Example 1 was used as a near-infrared absorber.

### [Comparative Example 2]

An intaglio printing ink was prepared in the same manner as in Example 2, except that the copper hydroxide phosphate obtained in Comparative Synthesis Example 1 was used as a near-infrared absorber.

**[Table 2]**

| Classificati on | Components | Contents (wt%) |
|---|---|---|
| Binder | Rosin-modified phenolic resin | 25 |
| Near-infrared absorber | Near-infrared absorber obtained in Experimental Example 1, Synthesis Example 1, and Comparative Synthesis Example 1 | 20 |
| Filler | Calcium carbonate | 30 |
| Other Auxiliaries | Cobalt-based desiccant | 1 |
| | Aliphatic hydrocarbon-based solvent | 24 |

Specimens were produced by printing with the inkjet inks prepared by the methods of Example 1, Reference Example 1, and Comparative Example 1, and the intaglio printing inks prepared by the methods of Example 2, Reference Example 2, and Comparative Example 2. The results of the chemical resistance test conducted on these specimens are shown in Table 3 below.

**[Table 3]**

| Wavelength 850 (nm) | Inkjet ink | | | Intaglio printing ink | | |
|---|---|---|---|---|---|---|
| | Example 1 | Referen ce Example 1 | Compara tive Example 1 | Example 2 | Referen ce Example 2 | Compara tive Example 2 |
| | Reflect ance deviati on (△%) | Reflect ance deviati on (△%) | Reflect ance deviati on (△%) | Reflect ance deviati on (△%) | Reflect ance deviati on (△%) | Reflect ance deviati on (△%) |
| Initial | - | - | - | - | - | - |
| Gasoline | 0.46 | 2.78 | 4.51 | 0.34 | 2.14 | 4.19 |
| Toluene | 1.53 | 1.87 | 3.98 | 1.42 | 1.39 | 3.67 |
| 2% Sulfuric acid | 6.88 | 29.74 | 40.13 | 6.73 | 28.01 | 38.54 |
| 5% Hydrochlor ic acid | 7.6 | 35.48 | 45.38 | 7.38 | 34.97 | 42.4 |
| 2% Sodium hydroxide | 6.51 | 32.62 | 35.22 | 6.12 | 31.1 | 31.56 |
| Artificial sweat | 4.41 | 27.49 | 38.31 | 3.97 | 26.83 | 35.04 |

The reflectance of the printed specimens of the near-infrared absorbing inks for inkjet printing of Example 1, Reference Example 1, and Comparative Example 1, and the printed specimens of the near-infrared absorbing ink for intaglio printing of Example 2, Reference Example 2, and Comparative Example 2, respectively, were measured. The reflectance was then measured after chemical treatment with gasoline, toluene, 2% sulfuric acid, 5% hydrochloric acid, 2% sodium hydroxide, and artificial sweat. Table 3 shows the reflectance deviation of each specimen after chemical treatment, calculated relative to the initial reflectance of the untreated specimen.

For the ink compositions of Example 1 and Example 2, it can be confirmed that the reflectance deviations after each chemical treatment ranged from 0.46% to 7.6% and from 0.34% to 7.38%, respectively, relative to the initial values of the untreated specimens. It can be confirmed that the maximum reflectance deviations in Example 1 and Example 2 were 7.6% and 7.38%, respectively, indicating that even after chemical treatment, the deviations remained below 8% relative to the initial values of the untreated specimens. These results confirm that the inks exhibit excellent chemical resistance to various chemicals.

For the ink compositions of Reference Example 1 and Reference Example 2, it can be confirmed that the reflectance deviations after each chemical treatment ranged from 1.87% to 35.48% and from 1.39% to 34.97%, respectively, relative to the initial values of the untreated specimens. It can be confirmed that that the reflectance deviations were as large as about 4.5 times those of Examples 1 and 2, with a maximum deviation of less than about 36%.

For the ink compositions of Comparative Example 1 and Comparative Example 2, it can be confirmed that the reflectance deviations after each chemical treatment ranged from 3.98% to 45.38% and from 3.67% to 42.4%, respectively, relative to the initial values of the untreated specimens. It can be confirmed that that the reflectance deviations were as large as about 6 times those of Examples 1 and 2, with a maximum deviation of less than about 46%.

For the near-infrared absorbing ink compositions of Example 1 and Example 2, it can be confirmed that since they contain sodium dodecylbenzenesulfonate, which is an anionic surfactant, they exhibit excellent chemical resistance properties, such as solvent resistance, acid resistance, and alkali resistance compared to the inks of Reference Examples 1 and 2 and Comparative Examples 1 and 2.

## Claims

1. A security printing ink composition comprising: a phosphate-based near-infrared absorber having a nanoparticulate particle size distribution and containing one or more transition elements selected from the group consisting of Ti, V, Cr, Mn, Fe, Co, Ni, Cu, Zn, Zr, Nb, Mo, Ru, Rh, Pd, Ag, Hf, Ta, W, Re, Os, Ir, Pt, and Au; and a surfactant, wherein the near-infrared absorber and the surfactant form a micellar structure.

2. The security printing ink composition of claim 1, wherein the near-infrared absorber is Cu₂PO₄(OH), Cu₂PO₄(OH) having a libethenite crystal structure.

3. The security printing ink composition of claim 1, wherein the nanoparticulate near-infrared absorber has a particle size distribution of 10 to 1,000 nm.

4. The security printing ink composition of claim 1, wherein the surfactant is one or more selected from the group consisting of polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate, polyoxyethylene sorbitan trioleate, sorbitan monolaurate, sorbitan monostearate, sorbitan tristearate, sorbitan monooleate, sorbitan trioleate, poloxamer 124, poloxamer 188, poloxamer 237, poloxamer 338, poloxamer 407, dodecylbenzenesulfonate, poly(4-vinylpyridine), sodium dodecyl sulfonate, cetyltrimethylammonium bromide, polyvinylpyrrolidone, and octylphenol ethoxylate.

5. The security printing ink composition of claim 1, wherein the nanoparticulate near-infrared absorber includes IR-absorbing transition element atoms or ions at a concentration of 20 to 40% by weight.

6. The security printing ink composition of claim 1, wherein the content of the nanoparticulate near-infrared absorber is 0.1 to 40% by weight of the total ink composition.

7. The security printing ink composition of claim 1, wherein the ink composition is used for inkjet, offset, screen, gravure, and intaglio printing.
